(19) Europäisches Patentamt
European Patent Office
Office européen des brevets

(11) **EP 2 747 462 A1**

(12) **DEMANDE DE BREVET EUROPEEN**

(43) Date de publication:
**25.06.2014 Bulletin 2014/26**

(51) Int Cl.:
*H04W 4/04* (2009.01)

(21) Numéro de dépôt: **13196618.6**

(22) Date de dépôt: **11.12.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.12.2012 FR 1262243**

(71) Demandeur: **Fidzup**
**92800 Puteaux (FR)**

(72) Inventeur: **Noisel, Christophe**
**75010 PARIS (FR)**

(74) Mandataire: **Potdevin, Emmanuel Eric**
**LLR**
**11 boulevard de Sébastopol**
**75001 Paris (FR)**

(54) **Procédé de localisation d'un terminal de télécommunications**

(57) Dans le procédé de localisation d'un terminal de télécommunications :
- des moyens automatisés (4) déterminent au moyen du terminal au moins une caractéristique d'un bruit d'un environnement sonore du terminal ;
- des moyens automatisés (4) déterminent une valeur de seuil en fonction de la caractéristique ; et
- des moyens automatisés (4) analysent au moyen du terminal une partie d'un signal sonore de l'environnement, la partie ayant une amplitude qui dépasse le seuil, l'analyse étant effectuée pour obtenir au moins une donnée du signal relative à une localisation du terminal.

Fig. 1

**Description**

L'invention concerne la localisation des terminaux de télécommunications, par exemple des téléphones mobiles.

On connaît des procédés dans lesquels un signal sonore inaudible à l'oreille humaine est diffusé dans l'environnement d'un lieu, par exemple un magasin. Ce signal comprend une ou plusieurs données caractéristiques du magasin ou de la zone du magasin dans laquelle il est diffusé. Lorsque le porteur d'un téléphone mobile pénètre dans le magasin, le téléphone reçoit le signal, l'analyse et en extrait la donnée. Il la transmet à un serveur via un réseau de télécommunications et ce serveur envoie en retour au terminal des données ou des commandes. C'est ainsi que l'utilisateur peut voir s'afficher sur l'écran du terminal des offres promotionnelles, des bons de réduction ou des informations sur certaines opérations commerciales en cours dans le magasin.

Pour que le procédé soit efficace et que tous les utilisateurs susceptibles de recevoir ce type de message le reçoivent effectivement, il doit être compatible avec un large éventail de terminaux. Or les performances des terminaux varient considérablement lorsqu'il s'agit de détecter un tel signal et d'en extraire les données pertinentes. En particulier, les terminaux ont des microphones qui peuvent avoir des réponses fréquentielles très différentes. De plus, certains terminaux ou leurs systèmes d'exploitation n'emploient pas les mêmes fréquences d'échantillonnage durant l'enregistrement du signal. Par exemple, certains utilisent une fréquence de 44,1 kHz et d'autres une fréquence de 48 kHz. Dans ces conditions, lorsque l'analyse du signal met en oeuvre le calcul de son amplitude, ce calcul donne des résultats différents pour des conditions d'enregistrement identiques. Concrètement, lorsque le rapport du signal sur le bruit ambiant est faible, certains terminaux peuvent être dans l'impossibilité d'effectuer une détection correcte du signal. Certains peuvent même produire des faux positifs.

Par ailleurs, étant donnée la puissance relative des différents terminaux mobiles, il peut s'avérer utile d'effectuer une analyse fréquentielle au moyen d'un filtre à réponse impulsionnelle infinie qui demande peu de calcul par opposition à un filtre à réponse impulsionnelle finie. Cependant un tel filtre est considéré comme instable et est susceptible de produire lui aussi des faux positifs, par exemple lorsque se produit dans le signal une impulsion soudaine trop forte.

Enfin, pendant la réception du signal, il se peut que l'utilisateur soit en mouvement ou que les conditions d'enregistrement du signal évoluent, par exemple avec un changement de bruit ambiant, ce qui complique encore l'analyse du signal.

Un but de l'invention est d'améliorer la reconnaissance et la détection du signal, indépendamment des caractéristiques techniques du terminal et du bruit ambiant.

À cet effet, on prévoit selon l'invention un procédé de localisation d'un terminal de télécommunications, dans lequel :

- des moyens automatisés déterminent au moyen du terminal au moins une caractéristique d'un bruit d'un environnement sonore du terminal ;
- des moyens automatisés déterminent une valeur de seuil en fonction de la caractéristique ; et
- des moyens automatisés analysent au moyen du terminal une partie d'un signal sonore de l'environnement, la partie ayant une amplitude qui dépasse le seuil, l'analyse étant effectuée pour obtenir au moins une donnée du signal relative à une localisation du terminal.

Ainsi, on met en oeuvre un étalonnage qui permet d'adapter l'analyse du signal aux conditions de bruit ambiant. On peut donc normaliser les résultats. Le seuil que l'on utilise est adapté aux conditions d'écoute et d'enregistrement. Les performances du procédé deviennent donc largement indépendantes des équipements du dispositif et du niveau de bruit environnant. L'invention facilite par conséquent l'obtention des informations avec le terminal quel que soit son type.

Le terme « localisation » signifie ici que l'on cherche à déterminer si le terminal se trouve à proximité géographique d'un élément d'environnement particulier. Il s'agit par exemple de déterminer que le terminal se trouve dans un centre commercial prédéterminé, ou dans un certain magasin, ou encore dans un certain type d'installation, par exemple un aéroport, une gare,.... Il ne s'agit pas nécessairement d'effectuer une localisation qui permette de situer le terminal sur une carte géographique. Par exemple, il pourra être suffisant de déterminer que le terminal se trouve dans un magasin d'une certaine chaîne de magasins sans qu'il soit nécessaire d'identifier dans quelle ville ou dans quel quartier d'une ville se trouve le magasin en question. Naturellement, l'invention est également applicable au cas où la localisation permet d'effectuer une géolocalisation complète, à savoir permettant de situer le terminal sur une carte géographique et notamment de déterminer le pays de localisation, la rue et l'adresse exacte.

Avantageusement, préalablement à l'étape d'analyse du bruit, les moyens automatisés analysent le signal.

Cette disposition permet d'effectuer en même temps l'analyse du signal et celle du bruit et en particulier d'actualiser en temps réel les paramètres de l'analyse du signal en fonction des résultats de celle du bruit. Cela permet d'améliorer les performances du procédé.

Avantageusement, les moyens automatisés mettant en oeuvre les trois étapes sont les mêmes et de préférence appartiennent au terminal.

Il est avantageux en effet que le procédé soit mis en oeuvre directement au sein du terminal par des moyens automatisés de ce dernier. Néanmoins, on peut aussi envisager que le procédé soit mis en oeuvre par des moyens automatisés distants du terminal, celui-ci servant seulement pour recevoir le signal et le bruit et transmettre les informations à leur sujet à ces moyens pour analyse.

De préférence, l'analyse de la partie du signal ayant lieu dans une première bande de fréquences prédéterminée, l'étape de détermination de la caractéristique porte sur un bruit compris dans une deuxième bande de fréquence disjointe de la première bande.

La distance entre les deux bandes est de préférence supérieure ou égale à 100 Hz.

Il est intéressant en effet d'effectuer l'analyse du bruit sur une bande de fréquences non utilisée par le signal qu'on cherche à analyser mais proche des fréquences de ce dernier. La distance de 100 Hz permet en particulier de se trouver hors de portée d'un éventuel effet Doppler.

Avantageusement, les moyens automatisés effectuent une analyse fréquentielle du bruit.

De préférence, ils effectuent en même temps une analyse fréquentielle du signal.

On peut prévoir que la caractéristique constitue une valeur moyenne de l'amplitude.

Avantageusement, les moyens automatisés déterminent la valeur de seuil au moyen d'une caractéristique du signal.

Cette caractéristique peut être relative à une amplitude du signal, par exemple une valeur maximale d'amplitude du signal.

Le seuil est de préférence une somme pondérée de la caractéristique du bruit et de la caractéristique du signal.

Par exemple, la caractéristique du bruit a un coefficient de 0,65 et la caractéristique du signal un coefficient de 0,35.

Avantageusement, le signal comprend au moins l'un des éléments suivants :

- une séquence d'initialisation,
- un champ d'en-tête,
- un code de redondance cyclique,
- un code correcteur, et
- une signature d'authenticité,

et de préférence comprend tous ces éléments.

On peut prévoir que les moyens automatisés transmettent la donnée à un serveur via un réseau de télécommunications, puis le terminal reçoit au moins une donnée et/ou au moins une commande via un réseau de télécommunications.

On prévoit également selon l'invention un programme comprenant des instructions de code aptes à commander l'exécution d'un procédé selon l'invention lorsqu'il est exécuté sur un ordinateur.

On prévoit enfin selon l'invention un dispositif de localisation d'un terminal de télécommunications, qui comprend des moyens aptes à :

- déterminer au moyen d'un terminal au moins une caractéristique d'un bruit d'un environnement sonore du terminal, ;
- déterminer une valeur de seuil en fonction de la caractéristique ; et
- analyser au moyen du terminal une partie d'un signal sonore de l'environnement, la partie ayant une amplitude qui dépasse le seuil, l'analyse étant effectuée pour obtenir au moins une donnée du signal relative à une localisation du terminal.

Nous allons maintenant présenter un mode de mise en oeuvre du procédé de l'invention et une variante à titre d'exemples non limitatifs et à l'appui des dessins annexés sur lesquels :

- la figure 1 est un schéma des éléments d'un système mettant en oeuvre l'invention ;
- les figures 2 à 4 sont des courbes illustrant certains aspects du procédé ;
- la figure 5 est un organigramme d'un traitement mis en oeuvre dans le procédé;
- les figures 6 et 7 présentent des courbes relatives à la mise en oeuvre du procédé; et
- la figure 8 est un organigramme analogue à celui de la figure 5 et illustrant une variante de mise en oeuvre du procédé.

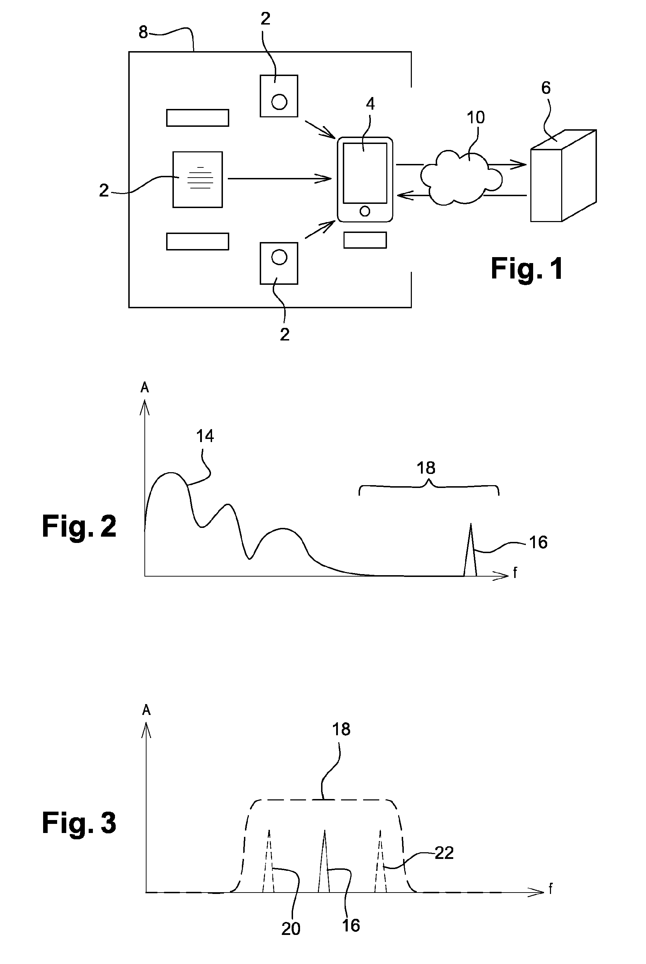

On a illustré à la figure 1 un système mettant en oeuvre le procédé de l'invention dans le présent exemple. Le système comprend ici un ou plusieurs émetteurs 2 aptes à émettre un signal sonore, un terminal de télécommunications 4 qui est ici un terminal de téléphonie mobile et un serveur 6.

Les émetteurs 2 sont par exemple formés par des enceintes. Ils servent à diffuser un signal sonore sur une ou plusieurs fréquences inaudibles aux humains, par exemple sur une fréquence ultrasonore. Ces émetteurs sont disposés dans un lieu prédéterminé 8 qui est en l'espèce un magasin. Mais dans d'autres modes de mise en oeuvre, il pourrait s'agir d'une zone prédéterminée d'un magasin ou encore d'une installation telle qu'un centre commercial, une gare, ....

Le ou chaque émetteur 2 peut être réalisé de différentes façons. Il peut s'agir d'un boîtier indépendant apte à émettre le signal de façon autonome, indépendamment de tout autre dispositif. Il peut s'agir d'un élément relié à une installation de diffusion de sons telle qu'une chaîne haute fidélité. On peut notamment prévoir que le signal est diffusé en même temps qu'un signal audible tel qu'une musique d'ambiance ou des annonces commerciales.

Le signal utilisé dans le procédé et/ou le signal sonore audible qui lui est éventuellement superposé peut être enregistré au préalable sur un support quelconque tel qu'un disque CD ou DVD ou encore un disque dur, une mémoire flash etc. Il peut également s'agir d'un signal transmis en direct par un réseau de télécommunications depuis un serveur sur lequel il est enregistré.

Le terminal 4 est ici un terminal de téléphonie mobile apte à communiquer de façon classique en émission et en réception sur les réseaux de téléphonie connus, voire sur le réseau internet, au moyen des normes classiques, par exemple de type 3G ou 4G ou encore selon les normes Wifi ou Bluetooth. Il peut aussi s'agir d'un assistant personnel ou encore d'un ordinateur portable. Il dispose de moyens lui permettant de réceptionner le signal précité dans la bande de fréquences choisie et de moyens aptes à échantillonner ce signal avec une vitesse d'échantillonnage respectant la fréquence de Nyquist. Il doit aussi disposer d'un micro relativement sensible. Le terminal comprend au moins une mémoire et au moins une unité centrale.

Le terminal 4 comprend ici un programme ou une application enregistré sur un support d'enregistrement informatique et apte à commander l'exécution des étapes du procédé mises en oeuvre par le terminal et qui seront présentées ci-après. Il peut s'agir d'une application réalisée au moyen d'un kit de développement de logiciels ou SDK (*software development kit*). On suppose que ce programme ou cette application est actif avant le démarrage du procédé, l'application se trouvant par exemple en tache de fond du terminal.

Le serveur 6 est par exemple réalisé sous la forme d'un ordinateur comprenant une mémoire et une ou plusieurs unités centrales et disposant de moyens d'émission et de réception de messages sur un réseau de télécommunications tel que le réseau Internet. Le serveur comprend un ou plusieurs programmes comprenant des instructions de code aptes à commander l'exécution des étapes concernées du procédé lorsqu'il est exécuté sur le serveur.

On suppose dans la suite que le terminal et le serveur sont aptes à communiquer l'un avec l'autre à travers un ou plusieurs réseaux de télécommunications 10. Par exemple, une communication entre le terminal 4 et le serveur 6 peut transiter par un ou plusieurs réseaux de téléphonie mobile et par le réseau Internet.

Dans ses grandes lignes, le procédé de l'invention est ici mis en oeuvre de la façon suivante.

Le ou les émetteurs 2 diffusent dans l'environnement sonore de l'installation 8 un signal comprenant une ou plusieurs données relatives à l'installation, notamment à sa localisation.

Un utilisateur porteur du terminal 4 pénètre dans l'installation 8.

Le programme se trouvant dans le terminal détecte la présence de ce signal dans l'environnement sonore du terminal.

Le programme reçoit et enregistre ce signal. Il fait de même avec une partie du bruit de l'environnement sonore du terminal.

Le programme effectue une analyse du signal et une analyse du bruit qui lui permet de déterminer un seuil améliorant l'analyse du signal. Il extrait de ce dernier la ou les données précitées du signal concernant la localisation de l'installation.

Il transmet par le réseau 10 au serveur 6 un message comprenant cette donnée.

Le serveur 6 détermine un ou plusieurs contenus et/ou une ou plusieurs commandes associés à l'installation 8 ou à sa localisation et le transmet via le réseau 10 au terminal 4.

S'il s'agit de données, ces données sont affichées sur l'écran du terminal pour pouvoir être consultées par l'utilisateur. S'il s'agit d'une commande, celle-ci déclenche une action prédéterminée dans le terminal, par exemple l'affichage de données. Il s'agit par exemple de l'affichage sur l'écran du terminal d'un message promotionnel relatif à des activités dans l'installation 8, par exemple des prix réduits sur les articles d'un certain rayon du magasin.

Nous allons maintenant présenter certains aspects de la mise en oeuvre de ces étapes.

Dans le cadre du procédé, on peut mettre en oeuvre différentes méthodes de modulation du signal audio tel que la modulation en fréquence, en amplitude ou en phase. Certaines de ces modulations sont sujettes à l'introduction de parasites audibles, notamment lorsque la phase du signal change brutalement entre deux symboles. C'est pourquoi il est avantageux que la modulation ait lieu suivant un algorithme mettant en place un mécanisme de transition inter-symboles tel que la modulation GMSK (*Gaussian Minimum Shift Keying* ou modulation à déplacement minimum gaussien). Il s'agit de la modulation spécifiée pour la norme GSM. C'est une modulation de fréquence à enveloppe constante. La modulation GMSK est le résultat du filtrage par un filtre gaussien d'une modulation MSK.

L'émission du signal peut être effectuée en mettant en oeuvre une modulation par déplacement de fréquence (MDF), plus connue sous sa dénomination anglophone de *frequency-shift keying* (FSK) qui est un mode de modulation de fréquence numérique dans lequel le signal modulé varie entre des fréquences prédéterminées.

Le signal et les modalités de sa diffusion doivent tenir compte du fait qu'il est diffusé dans un environnement dans lequel le terminal 4 peut être en mouvement par rapport à l'émetteur 2. On peut donc tenir compte de l'effet Doppler qui est susceptible d'entraîner une translation dans le spectre fréquentiel du signal. Pour cette raison, lorsque l'émission du signal est effectuée sur plusieurs fréquences, par exemple en mettant en oeuvre un algorithme de type FSK, ces fréquences doivent être suffisamment espacées les unes des autres dans l'espace fréquentiel pour ne pas entraîner d'erreur de lecture.

En l'espèce, afin d'obtenir un signal non perceptible par l'oreille humaine, on utilise la bande de fréquence située entre 19 et 24 kHz. Dans le cas où l'émission du signal se fait en parallèle à une autre diffusion audio (par exemple de la musique ou des annonces), la limite inférieure de cette bande peut être abaissée. On a ainsi illustré à la figure 2, sur un diagramme illustrant l'amplitude en fonction de la fréquence, d'une part le son audible 14 diffusé dans l'environnement sonore et par exemple constitué de musique, et d'autre part le signal 16 du procédé, situé dans une bande de fréquence inaudible 18.

On considère à la figure 3 le cas d'une diffusion du signal 16 sur différentes fréquences. Celles-ci respecte un espacement fréquentiel d'environ 200 Hz afin de ne pas souffrir de l'effet Doppler lors du décodage du signal. Sur cette figure, 16 désigne le signal reçu lorsque le terminal est immobile alors que 20 et 22 désignent respectivement le signal reçu par un utilisateur qui s'éloigne de l'émetteur 2 et celui reçu par un utilisateur qui s'en approche. La bande de fréquence 18 utilisée pour l'analyse fréquentielle du signal dans le procédé couvre toute la gamme de fréquences des signaux 16, 20 et 22.

En l'espèce, les données transmises dans le signal sont organisées en une trame qui comprend les éléments suivants :

- une séquence initialisation,
- un champ d'en-tête définissant un ou plusieurs paramètres (par exemple une indication de version ou une longueur de champ de données), et
- un champ de données (comprenant notamment la ou les données à extraire).

Ce dernier peut présenter une ou plusieurs des propriétés suivantes, voire toutes :

- l'utilisation d'un code de redondance cyclique,
- l'utilisation d'un code correcteur,
- un chiffrement des données, et
- une signature prouvant l'authenticité du message.

Le code correcteur est une manière d'écrire le champ de données en utilisant un alphabet de symboles binaires spécifique.

Pour la mise en oeuvre de l'étape de démodulation, le signal est reçu par le terminal 4 à travers son microphone, éventuellement sous la forme de paquets d'échantillons (tels que des séries de 512 ou 1024 échantillons).

Le terminal 4 effectue une analyse fréquentielle sur les fréquences d'intérêts afin de constituer un historique des amplitudes ou magnitudes du signal. Cette analyse est effectuée par exemple au moyen d'une transformée de Fourrier rapide ou d'un algorithme de Goertzel. Cet historique permet d'observer des changements de valeur et d'opérer des calculs sur des mesures antérieures.

Afin de faciliter l'analyse et notamment d'anticiper d'éventuelles déviations fréquentielles (par effet Doppler ou en raison de distorsions harmoniques), le terminal applique en l'espèce une fonction de fenêtrage aux échantillons. Cette fonction est par exemple une fenêtre de Hamming. Cette fonction de fenêtrage a pour effet d'élargir la bande de fréquences étudiée et d'atténuer la réactivité de l'analyse fréquentielle en dehors de celle-ci.

La méthode de décodage du signal peut mettre en oeuvre un algorithme probabiliste, par exemple l'algorithme de Viterbi, ou bien se baser sur une simple fenêtre glissante sur un certain nombre d'amplitudes et calculer la valeur moyenne de l'amplitude du signal. Idéalement, cette fenêtre s'étend sur la durée d'un seul symbole afin de calculer une moyenne optimale. Si la moyenne calculée dépasse un certain seuil, la fréquence est considérée comme détectée et la valeur binaire correspondante est enregistrée. Dans le cas de l'utilisation d'un filtre passe-bande instable (l'algorithme de Goertzel est considéré comme potentiellement instable), l'analyse du symbole est découpée en plus petites séquences. Ainsi la moyenne glissante des différentes amplitudes permet d'atténuer efficacement les faux positifs.

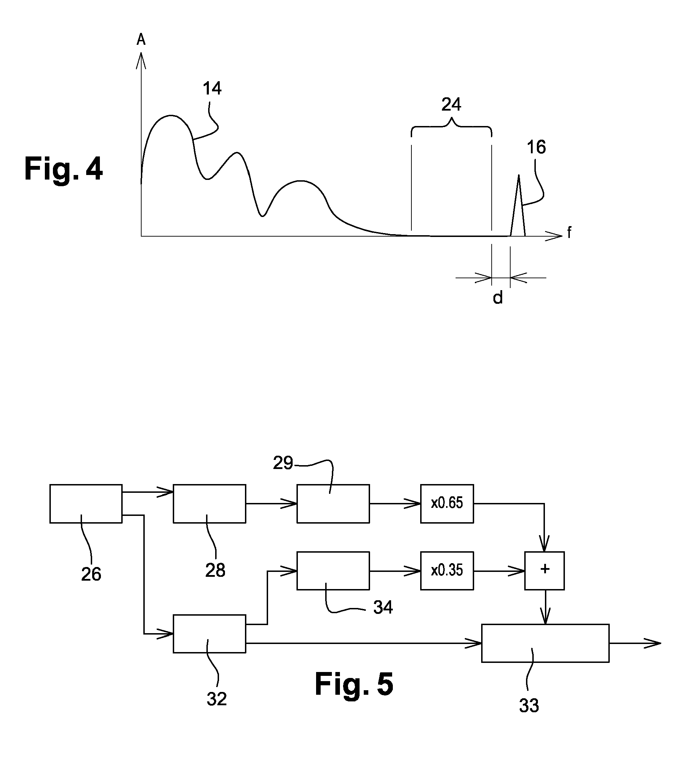

L'analyse du bruit environnant met en oeuvre une méthode similaire à celle qui vient d'être expliquée pour l'analyse du signal transportant les données. Cette analyse du bruit fournit une solution d'étalonnage en temps réel pendant l'écoute du signal afin de normaliser les résultats. Pour cela, comme illustré à la figure 4, on effectue une analyse fréquentielle du bruit sur une bande de fréquences 24 non-utilisée pour la transmission du signal 16 mais proche de ce dernier. Cette bande de fréquences 24 est par exemple située entre la bande de fréquences des sons audibles 14 servant pour l'ambiance sonore et celle 18 du signal 16. La bande de fréquences d'analyse du bruit est choisie de préférence pour être hors de portée d'un éventuel effet Doppler. On la situe à une distance minimale d de 100 Hz des fréquences du signal 16. Cette analyse fréquentielle est effectuée par exemple par une transformée de Fourrier rapide ou un algorithme de Goertzel.

Dans la bande de fréquences 24, le terminal écoute au moyen de son microphone le bruit environnant le terminal. Par définition, ce bruit ne transporte pas de signal reconnaissable. Le terminal enregistre un historique des amplitudes du bruit. De préférence, on effectue l'analyse seulement sur les dernières valeurs enregistrées, par exemple au moyen d'une fenêtre glissante dont la taille dépend entre autres de la fréquence d'échantillonnage utilisée. Il s'agit typiquement d'une fenêtre de calcul ne dépassant pas l'ordre de la seconde d'enregistrement. Le but de ces opérations est de déterminer un seuil de détection à partir duquel le terminal pourra facilement séparer le signal et le bruit.

Dans le présent exemple, ce seuil dépend d'une caractéristique du bruit et d'une caractéristique du signal lui-même. En l'espèce, la caractéristique du bruit est formée par une moyenne de son amplitude tandis que la caractéristique du signal est une valeur maximale de son amplitude. Dans le présent exemple, le seuil est formé d'une somme pondérée de ces deux caractéristiques.

Concrètement, dans le présent exemple, et en supposant qu'on traite des échantillons d'un signal constitué d'une seule fréquence, le terminal analyse le signal 16 et le bruit situé dans la bande 24 de façon simultanée pour mettre en oeuvre l'algorithme illustré à la figure 5.

C'est ainsi que l'étape d'échantillonnage 26 permet au terminal de distinguer ce qu'il reçoit dans la gamme de fréquences du signal 16 et dans la gamme de fréquences du bruit 24. Le terminal met en oeuvre une transformée de Fourrier discrète à l'étape 28, ce qui lui permet à l'étape 29 de déterminer une valeur moyenne de l'amplitude du bruit dans la fenêtre considérée.

Simultanément, le terminal met en oeuvre une transformée de Fourrier discrète à l'étape 32 sur le signal 16. Il en tire à l'étape 34 une valeur maximale de l'amplitude du signal dans la fenêtre considérée.

Le terminal affecte à la valeur moyenne du bruit un coefficient de pondération de 0,65 et à la valeur maximale du signal un coefficient de pondération de 0,35. Bien entendu, ces valeurs de coefficients sont seulement des exemples et d'autres valeurs sont envisageables. Les caractéristiques ainsi pondérées sont sommées, ce qui permet d'obtenir une valeur de seuil L qui vérifie donc :

$$L = 0,65\ B + 0,35\ S$$

où B et S désignent respectivement les caractéristiques du bruit et du signal déterminées précédemment.

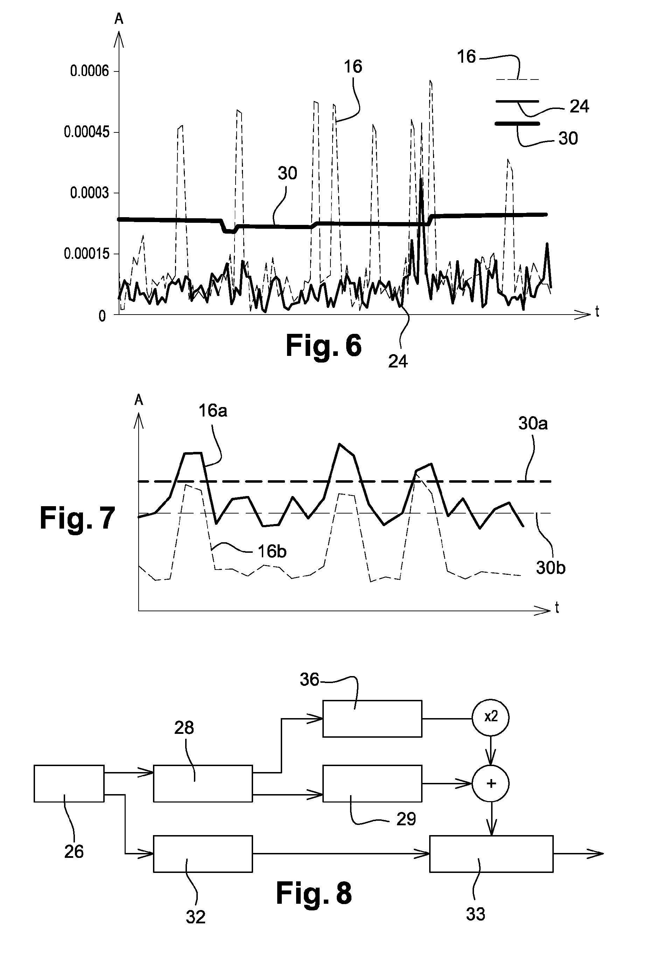

Ce seuil 30 est soustrait de l'amplitude du signal obtenue avec la transformée de Fourrier, comme illustré à la figure 6 à l'étape 33. La partie du signal en résultant est convertie ensuite sous forme binaire.

Le diagramme de la figure 6 montre en fonction du temps l'évolution de l'amplitude du signal 16, du bruit 24 et du seuil 30. On voit en particulier que le seuil 30 évolue au cours du temps en fonction notamment du bruit ambiant. Ce seuil est donc adapté en temps réel pour tenir compte des conditions d'écoute. Il reste la plupart du temps supérieur au bruit mais inférieur aux parties du signal transportant les données.

Sur la figure 7, on a illustré de façon analogue le signal 16a enregistré par un terminal 4A ainsi que le même signal 16b enregistré par un terminal 4B d'un type différent. Les différences entre les deux signaux tels qu'ils sont enregistrés par les terminaux respectifs sont liées en particulier à la sensibilité du microphone de chaque terminal. On a également illustré les seuils 30a et 30b calculés par les terminaux respectifs au moyen du procédé de l'invention. On voit que le seuil 30a est adapté au signal tel que reçu par le terminal 4A. Il en est de même pour le seuil associé à l'autre terminal. A contrario, on observe que le seuil 30a serait trop élevé pour le terminal 4B car il empêcherait la lecture correcte du signal.

Une fois la chaîne binaire déduite, l'algorithme se charge de détecter la présence de la séquence d'initialisation, puis d'obtenir toutes les données de la trame. Grâce à l'en-tête, le terminal est en mesure d'identifier la nature des données contenues dans le signal. Ces données peuvent être formées par une chaîne de caractères simples ou un identifiant binaire.

Ensuite, le programme adresse une requête au serveur 6 via le réseau 10. Le serveur 6 identifie dans une base de données un ou plusieurs contenus relatif à la donnée reçue, par exemple un contenu associé à une campagne commerciale relative à la donnée. Le serveur envoie le contenu au terminal. Ce contenu forme par exemple une commande et/ou un message qui pourra être affiché sur l'écran du terminal de l'utilisateur, la commande reçue déclenchant cet affichage par exemple.

On peut aussi prévoir que différents signaux sonores sont diffusés par différents émetteurs 2 associés à des zones respectives au sein d'une même installation 8. Le signal reçu par le terminal est donc fonction de la zone dans laquelle il se trouve. Le procédé permet ainsi l'envoi d'un contenu associé à cette zone précise. Il peut par exemple s'agir d'un rayon particulier d'un magasin. Le contenu peut alors concerner une promotion relative à ce rayon précis, par exemple. Le procédé selon l'invention permet donc de distinguer parmi plusieurs emplacements possibles du terminal 4 à l'intérieur de l'installation 8.

On a illustré à la figure 8 une variante de mise en oeuvre du procédé. Cette fois, après l'étape 28 de transformée de Fourrier discrète sur le bruit, on effectue sur l'amplitude du bruit à la fois un calcul de moyenne à l'étape 29 et un calcul d'écart type à l'étape 36. De plus, le seuil est formé cette fois par la somme pondérée de la moyenne et de l'écart type qui sont affectés respectivement d'un coefficient de 1 et de 2. Le seuil L' est donc calculé comme suit :

$$L' = M + 2\ E$$

où M désigne la moyenne et E désigne l'écart type.

Ici encore, on pourra utiliser d'autres coefficients de pondération que ceux présentés plus haut.

Par ailleurs, le calcul de la valeur maximale de l'amplitude du signal utile, précédemment effectuée à l'étape 34, n'a pas lieu ici. Le seuil n'est donc pas calculé en fonction d'une caractéristique du signal. Le seuil est soustrait du signal à l'étape 33 comme précédemment.

Le procédé de l'invention peut également être utilisé pour déclencher l'envoi d'un message de type SMS ou d'un courriel sur le terminal de l'utilisateur.

L'invention fournit donc un procédé amélioré de géolocalisation d'un terminal mobile par exemple pour la promotion de certains contenus à destination d'un utilisateur. Elle permet à un magasin d'augmenter son chiffre d'affaires.

Bien entendu, on pourra apporter à l'invention de nombreuses modifications sans sortir du cadre de celle-ci.

On peut notamment envisager que le terminal sert seulement à capter le signal ainsi que le bruit environnant et à les transmettre à un serveur distant. C'est ce dernier qui effectue l'analyse du signal et du bruit afin d'extraire la ou les données d'intérêts du signal. Le serveur envoie ensuite au terminal le contenu associé à ces données.

On peut même prévoir que les différentes étapes du procédé sont effectuées par des moyens automatisés différents les uns des autres, éventuellement tous différents du terminal.

On peut également prévoir un autre mode de réalisation qui se déroule comme suit.

Lorsque le terminal se trouve dans une zone prédéterminée, par exemple un centre commercial ou une gare, et qu'il est connecté au réseau 10, il télécharge par avance et à toutes fins utiles un ou plusieurs contenus et/ou une ou plusieurs commandes susceptibles d'être utilisés ultérieurement en relation avec un lieu particulier au sein de la zone. Ce téléchargement est déclenché par exemple lorsque le terminal détecte que sa position géographique se trouve dans la zone en question. Cette détection a lieu par exemple au moyen d'une fonction GPS (*global positioning system* ou système de localisation mondial) du terminal moyennant des antennes Wifi ou une connexion à un réseau de téléphonie de type GSM ou autre. Ces contenus sont associés de façon prédéterminée et avant même leur téléchargement à un ou plusieurs lieux 8 respectifs de la zone. Ce téléchargement a lieu à partir d'un ou plusieurs serveurs 6 comme indiqué précédemment. Ces contenus sont stockés dans le terminal mais ne sont pas affichés et aucune des commandes n'est activée.

Ensuite, lors de la mise en oeuvre de l'étape du procédé au cours de laquelle ont lieu l'analyse du signal et du bruit et l'obtention d'une ou plusieurs données associées à un lieu 8 prédéterminé, par exemple un magasin particulier au sein du centre commercial ou de la gare, le terminal détermine si l'un des contenus téléchargés par avance est associé au lieu 8 en question et le cas échéant affiche les informations ou déclenche la commande associée.

Ce mode de réalisation a donc pour avantage de ne pas nécessiter une connexion du terminal lorsque celui-ci procède à l'analyse du signal et à l'affichage des données ou au déclenchement de la commande dans le lieu 8. En effet, le terminal peut alors se trouver en mode hors ligne. C'est le cas ainsi si aucun réseau de télécommunication n'est disponible à l'endroit où se trouve le terminal. Naturellement, si le terminal est connecté au réseau 10 à ce moment, on peut envisager qu'il exécute de préférence les étapes du mode de mise en oeuvre du procédé présenté précédemment pour communiquer avec le serveur 6, afin que l'on soit certain que les contenus ainsi téléchargés soient les plus à jour. On peut aussi prévoir que, dans un tel cas, le terminal exploite à la fois un ou plusieurs contenus obtenus sur le champ, après l'analyse, à partir du serveur 6 et un ou plusieurs contenus téléchargés par avance.

Ce mode de mise en oeuvre utilisable en partie en mode hors ligne a aussi pour avantage de permettre l'affichage du contenu ou le déclenchement de la commande sans retard après l'identification de la donnée du signal alors que, lorsque le terminal est en ligne, le téléchargement du contenu peut parfois retarder cet affichage de quelques instants, notamment si le contenu est particulièrement volumineux ou si la qualité de la communication sur le réseau n'est pas bonne.

**Revendications**

1.  Procédé de localisation d'un terminal (4) de télécommunications, **caractérisé en ce que** :

    - des moyens automatisés (4) déterminent au moyen du terminal au moins une caractéristique d'un bruit (24) d'un environnement sonore du terminal ;
    - des moyens automatisés (4) déterminent une valeur de seuil (30) en fonction de la caractéristique ; et
    - des moyens automatisés (4) analysent au moyen du terminal une partie d'un signal sonore (16) de l'environnement, la partie ayant une amplitude qui dépasse le seuil, l'analyse étant effectuée pour obtenir au moins une donnée du signal relative à une localisation du terminal.

2.  Procédé selon la revendication précédente dans lequel les moyens automatisés mettant en oeuvre les trois étapes sont les mêmes et de préférence appartiennent au terminal (4).

3.  Procédé selon au moins l'une quelconque des revendications précédentes dans lequel, l'analyse de la partie du signal ayant lieu dans une première bande de fréquences prédéterminée (18), l'étape de détermination de la caractéristique porte sur un bruit compris dans une deuxième bande de fréquence (24) disjointe de la première bande, la distance entre les deux bandes étant de préférence supérieure ou égale à 100 Hz.

4.  Procédé selon au moins l'une quelconque des revendications précédentes dans lequel les moyens automatisés (4) effectuent une analyse fréquentielle du bruit et de préférence effectuent en même temps une analyse fréquentielle du signal.

5.  Procédé selon au moins l'une quelconque des revendications précédentes dans lequel la caractéristique constitue une valeur moyenne de l'amplitude.

6.  Procédé selon au moins l'une quelconque des revendications précédentes dans lequel les moyens automatisés (4) déterminent la valeur de seuil au moyen d'une caractéristique du signal, notamment relative à une amplitude du signal, par exemple une valeur maximale d'amplitude du signal, le seuil étant de préférence une somme pondérée de la caractéristique du bruit et de la caractéristique du signal, par exemple la caractéristique du bruit ayant un coefficient de 0,65 et la caractéristique du signal un coefficient de 0,35.

7. Procédé selon au moins l'une quelconque des revendications précédentes dans lequel le signal (16) comprend au moins l'un des éléments suivants :

   - une séquence d'initialisation,
   - un champ d'en-tête,
   - un code de redondance cyclique,
   - un code correcteur, et
   - une signature d'authenticité,
   et de préférence comprend tous ces éléments.

8. Procédé selon au moins l'une quelconque des revendications précédentes dans lequel les moyens automatisés transmettent la donnée à un serveur (6) via un réseau de télécommunications (10), puis le terminal reçoit au moins une donnée et/ou au moins une commande via un réseau de télécommunications.

9. Programme comprenant des instructions de code aptes à commander l'exécution d'un procédé selon au moins l'une quelconque des revendications précédentes lorsqu'il est exécuté sur un ordinateur.

10. Dispositif (4) de localisation d'un terminal de télécommunications, **caractérisé en ce qu'**il comprend des moyens aptes à :

   - déterminer au moyen d'un terminal au moins une caractéristique d'un bruit (24) d'un environnement sonore du terminal, ;
   - déterminer une valeur de seuil (30) en fonction de la caractéristique ; et
   - analyser au moyen du terminal une partie d'un signal sonore (16) de l'environnement, la partie ayant une amplitude qui dépasse le seuil, l'analyse étant effectuée pour obtenir au moins une donnée du signal relative à une localisation du terminal.

**Fig. 1**

**Fig. 2**

**Fig. 3**

**Fig. 4**

**Fig. 5**

**Fig. 6**

**Fig. 7**

**Fig. 8**

Europäisches
Patentamt

European
Patent Office

Office européen
des brevets

**RAPPORT DE RECHERCHE EUROPEENNE**

Numéro de la demande

EP 13 19 6618

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/027582 A1 (HAYASHIDA ATSUSHI [JP]) 6 février 2003 (2003-02-06) * alinéas [0035] - [0038], [0045], [0057] - [0058] * ----- | 1-10 | INV. H04W4/04 |
| X | US 2012/214416 A1 (KENT JONATHAN DOUGLAS [US] ET AL) 23 août 2012 (2012-08-23) * alinéas [0058], [0059], [0094], [0119] * ----- | 1-10 | |
| X | GB 2 479 806 A (SAMSUNG ELECTRONICS CO LTD [KR]) 26 octobre 2011 (2011-10-26) * page 11, ligne 11 - page 13, ligne 18 * ----- | 1-10 | |

DOMAINES TECHNIQUES
RECHERCHES (IPC)

H04W

Le présent rapport a été établi pour toutes les revendications

| Lieu de la recherche | Date d'achèvement de la recherche | Examinateur |
|---|---|---|
| Munich | 22 avril 2014 | Milano, Massimo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

...........................................................................
& : membre de la même famille, document correspondant

EPO FORM 1503 03.82 (P04C02)

EP 2 747 462 A1

**ANNEXE AU RAPPORT DE RECHERCHE EUROPEENNE
RELATIF A LA DEMANDE DE BREVET EUROPEEN NO.**

EP 13 19 6618

22-04-2014

| Document brevet cité au rapport de recherche | Date de publication | Membre(s) de la famille de brevet(s) | Date de publication |
|---|---|---|---|
| US 2003027582 A1 | 06-02-2003 | CN 1402443 A | 12-03-2003 |
| | | JP 4049558 B2 | 20-02-2008 |
| | | JP 2003052064 A | 21-02-2003 |
| | | KR 20030014114 A | 15-02-2003 |
| | | US 2003027582 A1 | 06-02-2003 |
| US 2012214416 A1 | 23-08-2012 | US 2012214416 A1 | 23-08-2012 |
| | | WO 2012116213 A1 | 30-08-2012 |
| GB 2479806 A | 26-10-2011 | GB 2479806 A | 26-10-2011 |
| | | KR 20110115519 A | 21-10-2011 |